# EUROPEAN PATENT APPLICATION

(11) **EP 4 723 181 A1**
(43) Date of publication of application: **08.04.2026**
(21) Application number: 24852437.3
(22) Date of filing: 01.08.2024
(51) Int. Cl.: H01M 4/04, H01M 10/04, B65H 43/04, G06F 16/904, G06F 16/901, G06F 16/9032, G06F 16/9038

(54) **BATTERY MANUFACTURING SYSTEM**

(30) Priority: 04.08.2023 KR 20230101921
(71) Applicant: LG Energy Solution, Ltd., Seoul 07335 (KR)
(72) Inventor: HONG, Jin Pyo, Daejeon 34122 (KR); KIM, Min Su, Daejeon 34122 (KR); CHOI, Ee Beom, Daejeon 34122 (KR)
(74) Representative: BCKIP Part mbB
(86) International application number: PCT/KR2024/095950
(87) International publication number: WO 2025/034084

(57) **Abstract**

A battery manufacturing system includes an electrode processing device for performing the electrode process; and a roll map creation device for creating a roll map including coordinate data indicative of the location of an electrode and measurement and inspection data generated by the electrode process performed on the electrode and matched to the coordinate data. The electrode processing device includes an unwinder configured to unwind an electrode from a first electrode roll; a rewinder configured to wind the electrode onto a second electrode roll; an inspection measuring instrument for collecting the measurement and inspection data of the electrode being transferred; and a first encoder provided on one side of the electrode being transferred, and configured to detect a speed of movement of the electrode by irradiating the electrode with a laser, and the roll map creation device is configured to receive input of a defect location of the electrode and create an electrode removal section corresponding to the defect location, the electrode removal section being created based on data detected by the first encoder.

## Description

### [Cross-Reference to Related Applications]

This application is a European Regional Phase entry of International Application PCT/KR2024/095950 filed on Aug. 1, 2024, which claims the benefit of priority from Korean Patent Application No. 10-2023-0101921, filed on Aug. 4, 2023, the disclosures of which are incorporated herein by reference.

### [Technical Field]

The present disclosure relates to a battery manufacturing system, and more specifically to a battery manufacturing system that may improve the traceability of battery products by accurately counting the amount of discarded defective electrodes.

### [Background]

With the technological development and increasing demand for electric vehicles, the demand for secondary batteries is also increasing rapidly. Lithium secondary batteries are widely used as an energy source for various electronic products, including mobile devices, due to their high energy density and operating voltage, as well as their excellent storage and lifetime characteristics.

In the battery manufacturing process, which includes the electrode process and the assembly process, it may be necessary to trace back through the entire process in the event of an issue with a semi-finished or finished battery, such as a defect. This means identifying which process each component of the battery cell that is being traced originated from.

In order to more easily identify the cause of defects, there is a need to improve the reliability of production data while ensuring cell traceability in the complex battery manufacturing process.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

### [Summary]

The first technical challenge that the present disclosure seeks to address is to provide a battery manufacturing system that may improve the traceability of battery products by accurately counting the amount of discarded defective electrodes.

The second technical challenge that the present disclosure seeks to address is to provide a battery manufacturing method that may improve the traceability of battery products by accurately counting the amount of discarded defective electrodes.

To accomplish the first technical challenge, the present disclosure provides a battery manufacturing system including: an electrode processing device for performing the electrode process; and a roll map creation device for creating a roll map comprising coordinate data indicative of the location of an electrode and measurement and inspection data generated by the progress of an electrode process performed on the electrode and matched to the coordinate data, wherein the electrode processing device includes: an unwinder configured to unwind an electrode from a first electrode roll; a rewinder configured to wind the electrode to be a second electrode roll; an inspection measuring instrument for collecting the measurement and inspection data of the electrode being transferred; and a first encoder provided on one side of the electrode being transferred, and configured to detect a speed of the electrode by irradiating a laser onto the electrode, wherein the first encoder is a contactless encoder, and the roll map creation device is configured to receive input of a defect location of the electrode and create an electrode removal section corresponding to the defect location, the electrode removal section being created based on data detected from the first encoder.

In some embodiments, the roll map creation device may be configured to generate a tag coordinate of a tag corresponding to the defect location to create an electrode removal section.

In some embodiments, the roll map creation device may be configured to define, based on the tag coordinate, a preceding removal reference coordinate preceding the tag coordinate and a following removal reference coordinate following the tag coordinate, and to define a section between the preceding removal reference coordinate and the following removal reference coordinate as an electrode removal section.

In some embodiments, the first encoder may be provided on the unwinder.

In some embodiments, the battery manufacturing system may further include a second encoder, which is a contact encoder, on the rewinder.

In some embodiments, the first encoder may be configured to transmit an unwound amount signal based on a linear velocity of the electrode to the roll map creation device.

In some embodiments, the roll map creation device may be configured to calculate the amount of disposal due to a defect of the electrode based on the unwound amount signal.

In some embodiments, the first encoder includes: a first light source configured to irradiate a first laser beam to the electrode; and a second light source configured to irradiate a second laser beam to the electrode not parallel to the first laser beam, wherein the first encoder may be configured to receive the first laser beam and the second laser beam that are reflected from the electrode, and is configured to detect a speed of the electrode by analyzing the reflected first laser beam and the second laser beam.

In some embodiments, the first encoder may be configured to analyze the reflected laser beam using interference patterns of Doppler-shifted light scattered from an electrode surface.

In some embodiments, the battery manufacturing system may further include a datum point sensor configured to detect a datum point on the electrode to generate a datum point sensing signal.

Another aspect of the present disclosure provides a battery manufacturing system including: an unwinder configured to unwind an electrode from a first electrode roll; a rewinder configured to wind the electrode to be a second electrode roll; a first encoder of a contactless type configured to detect a length of the electrode unwound by the unwinder to generate an unwound amount signal; a second encoder configured to detect a length of the electrode wound by the rewinder to generate a wound amount signal; and a programmable logic controller (PLC) configured to collect coordinate data indicative of a position on the electrode based on the wound amount signal.

In some embodiments, the PLC may be configured to collect scrap data indicative of a length of a disposed portion of the electrode sheet based on the unwound amount signal and the wound amount signal.

In some embodiments, the battery manufacturing system may further include a scrap port configured to dispose of a defective portion of the electrode sheet.

In some embodiments, the battery manufacturing system further includes a defect detection sensor configured to generate defect detection signals, wherein the PLC may be configured to collect defect sensing data by correlating the defect sensing signal with the coordinate data.

In some embodiments, the first encoder includes: a first light source configured to irradiate a first laser beam to the electrode; and a second light source configured to irradiate a second laser beam to the electrode not parallel to the first laser beam, wherein the first encoder may be configured to receive the first laser beam and the second laser beam that are reflected from the electrode, and is configured to detect a speed of the electrode sheet by analyzing an interference pattern of the reflected first laser beam and the second laser beam.

To accomplish the second technical challenge, the present disclosure provides a battery manufacturing method including: unwinding an electrode from the first electrode roll at the unwinder; detecting a speed of the electrode with a first encoder, which is a contactless encoder provided on the unwinder; winding the electrode into a second electrode roll at the rewinder; and creating a roll map comprising coordinate data indicative of the position on the electrode, and measurement and inspection data generated as the electrode process performed on the electrode progresses and matched to the coordinate data, wherein creating the roll map includes receiving a defect location of the electrode and creating an electrode removal section corresponding to the defect location, and the electrode removal section is created based on data detected from the first encoder.

In some embodiments, creating the roll map is performed by the roll map creation device, and the roll map creation device may be configured to generate a tag coordinate of a tag corresponding to the defect location to create an electrode removal section.

In some embodiments, the battery manufacturing method further includes sensing a length of the electrode wound by the rewinder with a second encoder, which is a contact type encoder provided on the rewinder, wherein the roll map creation device may be configured to calculate the amount of disposal due to the defect of the electrode from: an unwound amount signal generated by sensing the unwound length of the electrode with the first encoder; and a wound amount signal generated by sensing the wound length of the electrode with the second encoder.

The battery manufacturing system of the present disclosure may improve the traceability of battery products by accurately counting the amount of disposed defective electrodes generated during the electrode manufacturing process.

The effects that may be obtained from the exemplary embodiments of the present disclosure are not limited to those mentioned above, and other effects not mentioned may be clearly derived and understood by one of ordinary skill in the art to which the exemplary embodiments of the present disclosure belong from the following description. That is, unintended effects of practicing the exemplary embodiments of the present disclosure may also be derived from the exemplary embodiments of the present disclosure by one of ordinary skill in the art.

### [Brief Description of the Drawings]

FIG. 1 is a conceptual perspective view of the state of an electrode as it goes through the electrode manufacturing process.
FIG. 2 is a conceptual representation of a roll map created in an electrode manufacturing process according to one embodiment of the present disclosure.
FIG. 3 illustrates a battery manufacturing system according to exemplary embodiments of the present disclosure.
FIG. 4 is a block diagram illustrating a battery manufacturing system according to exemplary embodiments.
FIG. 5 is a block diagram conceptually illustrating the configuration of the first encoder.
FIG. 6 is a conceptual diagram illustrating how to define a defective portion of an electrode sheet based on a defect tag.
FIG. 7 is a schematic diagram illustrating a battery manufacturing system 11 according to another embodiment of the present disclosure.

### [Detailed Description]

Hereinafter, preferred embodiments of the concept of the present disclosure will be described in detail with reference to the accompanying drawings. However, embodiments of the present disclosure may be modified in many other forms, and it should not be construed that the scope of the present disclosure is limited by the embodiments described below. It is preferred that the embodiments of the concept of the present disclosure be construed as being provided to more fully explain the inventive concept to one of ordinary skill in the art. Like designations generally refer to like elements. Furthermore, various elements and areas in the drawings are schematically depicted. Accordingly, the concept of the present disclosure is not limited by the relative sizes or spacing depicted in the accompanying drawings.

Terms such as "first," "second," and the like may be used to describe various components, but the components are not limited by such terms. These terms are used only for the purpose of distinguishing one component from another. For example, a first component may be named a second component, and vice versa, a second component may be named a first component, without departing from the scope of the concept of the present disclosure.

The terms used in this application is used to describe certain embodiments only and is not intended to limit the concept of the present disclosure. Singular expressions include the plural unless the context clearly indicates otherwise. In this application, expressions such as "includes" or "has" are intended to designate the presence of the features, counts, steps, operations, components, parts, or combinations thereof described, and are not to be understood as precluding the possibility of the presence or addition of one or more other features, counts, operations, components, parts, or combinations thereof.

Unless otherwise defined, all terms used herein, including technical and scientific terms, may have the same meaning as commonly understood by one of ordinary skill in the art to which the concept of the present disclosure belongs. It is further understood that such terms, as commonly used and as defined in dictionaries, may be construed to have a meaning consistent with their meaning in the context of the art to which they relate, and are not to be construed in an unduly formal sense unless expressly defined herein.

When an embodiment can be instantiated differently, certain processes may be performed in a sequence other than that described. For example, two successively described processes may be performed substantially simultaneously, or in the opposite order from the order described.

In the accompanying drawings, variations in the depicted geometries may be expected, for example, due to manufacturing techniques and/or tolerances. Accordingly, embodiments of the present disclosure should not be construed as limited to the specific geometry of the areas shown herein, and may include, for example, variations in geometry resulting from manufacturing processes. All terms "and/or" used herein include each and every combination of one or more of the components mentioned. Further, as used herein, the term "substrate" may refer to the substrate itself, or to a laminated structure including the substrate and any predetermined layers or films formed on its surface. Further, as used herein, the term "surface of the substrate" may refer to the exposed surface of the substrate itself, or to the outer surface of a predetermined layer or film formed on the substrate.

### (First embodiment)

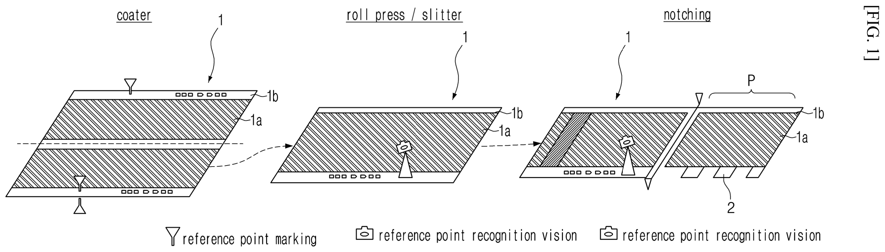

FIG. 1 is a conceptual perspective view of the state of an electrode as it goes through the electrode manufacturing process.
Referring to FIG. 1, a coated electrode 1 is manufactured by the formation of a coated part 1a by coating an active material on a current collector at a coater C. The uncoated part 1b, which is not coated with the active material, may be marked with a datum point. In some embodiments, the active material may be coated on both the upper and back surfaces of the electrode 1. The coated electrode 1 may be pressed by a press roll in a roll-press process and cut along the longitudinal direction of the electrode 1 by a slitter in a slitting process.

An electrode tab 2 may then be formed by being punched by a press or the like in a notching process. In the notching process, the electrode tab 2 is formed per unit electrode so that it may be cut by unit electrodes to be manufactured into a battery cell or cut in a subsequent process. The width of the unit electrode corresponds to the pitch (P) processed by the press.

The electrode manufacturing process is accomplished through a series of roll-to-roll processes in which the electrodes unwound from the unwinder are transferred to the rewinder and wound on the rewinder in a sequentially repeated process. That is, the electrodes are transferred from the unwinder of the coating process to the rewinder to be coated and the electrodes are wound on the rewinder to complete the electrode roll of the coating process. Next, the electrode roll is mounted on the unwinder of the roll press process and travels to the rewinder of the roll press process. The electrode roll is wound on the rewinder of the roll press process and is completed as an electrode roll of the roll press process. Subsequently, the electrode roll may be unwound from the unwinder of a subsequent process (e.g., a second roll press process, a slitting process, or a notching process) and, after a predetermined process, may be wound again in the rewinder of the subsequent process to complete the electrode roll of the subsequent process. As such, the electrode manufacturing process may include a series of roll-to-roll processes in which the electrodes unwound from the unwinder are moved and wound in the rewinder (so-called roll-to-roll processes), which are repeated sequentially.

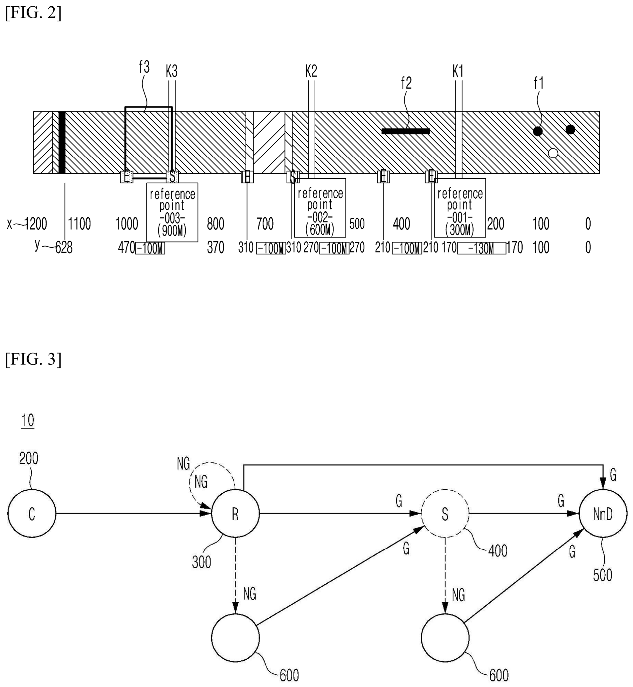

FIG. 2 is a conceptual representation of a roll map created in an electrode manufacturing process according to one embodiment of the present disclosure.

As described above, in coating processes, roll-press processes, slitting processes, and the like, the electrodes are performed in a roll-to-roll manner. A roll map simulates this performance of the electrode and may be represented in the form of a bar, wherein the longitudinal direction position and the width direction position on the electrode are represented by coordinates. That is, the roll map may be defined on a coordinate plane having two coordinate axes, the longitudinal direction axis and the width direction axis of the electrode, and each position on the electrode on the coordinate plane may be represented by a coordinate value on the coordinate plane. Such a roll map may save information on defects, quality, electrode breakage, etc., occurring in the electrode manufacturing process along with the coordinates, thereby facilitating visualization of data related to quality or defects in the electrode manufacturing process at a glance.

Referring to FIG. 2, exterior defects such as pinhole defects f1 and line defects f2 are visualized in the coordinates where the defects occurred. Also shown are mismatch portions f3 of the coated and uncoated parts. Other loading amount defects are also shown, and the area where the electrode was discarded at the outermost part is also shown.

Furthermore, the electrode 1 may be marked with datum points K1,K2,K3 at a predetermined distance. If a break occurs in the electrode 1 and it is connected by a joint connecting member, the electrode length may be reduced by the length of the break. As described earlier, points where exterior defects have occurred may also be removed so that the operator can connect them. The roll map may also simulate this situation and modify the coordinates on the roll map. Referring to FIG. 2, the coordinates without and with the electrode removal portion as described above are shown together in one roll map. The former may be referred to as the absolute coordinate (x) and the latter as the relative coordinate (y). As shown in FIG. 2, the relative coordinates (y) and absolute coordinates (x) may be displayed in parallel on a single roll map, but they can also be displayed separately. The roll map displayed by the relative coordinate (y) represents the state of the real electrode.

Such a roll map may be created for each individual process described above. However, in the roll-to-roll process, the beginning and end of the electrode may be reversed during the roll-to-roll process, such that the end of the roll map representing the electrode roll of the preceding process becomes the beginning of the roll map representing the electrode roll of the subsequent process, since the electrode wound in the preceding process is unwound in the subsequent process. In addition, in the case of a double-sided electrode in which the electrode active material is coated on both sides of the electrode, the electrode surface may be reversed, such as the upper surface electrode in the preceding process becoming the lower surface electrode in the subsequent process. In other words, depending on the winding direction of the electrode in the preceding process and the unwinding direction of the electrode in the subsequent process, a beginning-to-end reversal and a surface reversal of the electrode may occur. Since the roll maps of each process may be created based on these reversed electrodes, the coordinates of the roll maps of each process may be also reversed from each other. Furthermore, during a series of roll-to-roll processes, the length of the electrode may be changed by cutting and connecting the electrode several times in the longitudinal direction, such as by removing defective or broken sections. The roll map of each process may reflect these reversals and length changes, which may result in different coordinate values.

At the final process of the electrode process, only the remaining electrodes (survival electrodes) are left, excluding the parts of the electrodes removed in the previous process. Since the battery is manufactured as the survival electrode, if a problem occurs in a finished or semi-finished battery, the source of the problem may be traced by referring to the roll map of the final electrode. Furthermore, the roll map of each process described above may be referenced to trace back the electrode portion from which the problem originated. As such, the roll map is a useful tool for quality and defect identification as well as quality tracing.

FIG. 3 illustrates a battery manufacturing system 10 according to exemplary embodiments of the present disclosure.

Referring to FIG. 3, the battery manufacturing system 10 may include a coating device 200, a roll pressing device 300, a slitting device 400, a notching device 500, and rewinding stages 600.

The electrode sheets unwound from the introduced electrode rolls may be processed by any of the die coater of the coating device 200, the pressing rolls of the roll pressing device 300, and the slitting knife of the slitting device 400, and the processed electrode sheets may be wound into electrode rolls. Accordingly, the processing of the coating device 200, the roll pressing device 300, and the slitting device 400 for the production of the electrodes of the battery may be referred to as a roll-to-roll process.

The coating device 200 may perform a coating process on the electrode sheet. The coating process is a process of applying a coating material, such as an electrode slurry, on the electrode sheet. The electrode slurry may include an electrode active material, a conductive material, a binder, and a solvent. By dissolving the electrode active material, conductive material, and binder in a solvent, an electrode slurry may be provided.

The roll pressing device 300 may perform a roll pressing process on the electrode sheets. The roll-pressing process involves passing electrode sheets coated with an electrode slurry between pressing rolls that face each other. The roll-pressing process may flatten the surface of the electrode sheets and improve the coupling force between the active material on the electrode sheets and the current collector.

The slitting device 400 may perform a slitting process on the electrode sheet. By the slitting process, the electrode sheet may be separated into a plurality of electrode sheets.

The notching device 500 may cut the electrode sheets unwound from the electrode roll into the shape of the electrodes of the battery cell. Accordingly, unit electrodes may be formed in the notching device 500. The notching device 500 may further perform a drying process on either of the electrode sheets and the unit electrodes.

If the electrode sheet includes defects, the defects in the electrode sheet may be removed. The defects in the electrode sheet may be removed in any of the roll pressing device 300 and the rewinding stages 600.

In each of the rewinding stages 600, no substantial processing may be performed on the electrode sheet. Each of the rewinding stages 600 may change the winding direction of the electrode sheet. Each of the rewinding stages 600 may unwind the electrode roll, remove defects from the electrode sheets unwound from the electrode roll, and rewind the defect-removed electrode sheets. Accordingly, in addition to removing the defects in the electrode roll, an outer portion of the introduced electrode roll may be wound inwardly in the finished electrode roll. Likewise, the inner portion of the introduced electrode roll may be wound outwardly in the finished electrode roll.

The defects in the electrode sheet may be removed while the roll pressing device 300 is performing the roll pressing process. Optionally, the defects in the electrode sheet may be removed without performing the roll pressing process. The mode of operation of the roll pressing device 300 in which only the defective portion of the electrode sheet is removed without performing a roll pressing process may be referred to as the rewinding mode. In the rewinding mode, each of the pressing rolls may be moved to a separate and different position from the position where the electrode sheet was.

As the electrode rolls are processed in sequence by the coating device 200, the roll pressing device 300, the slitting device 400, and the notching device 500, unit electrodes may be provided. For long-width unit electrodes, the roll pressing process may be performed in the roll pressing device 300 and then passed directly to the notching device 500 without slitting of the slitting device 400.

If the electrode rolls processed by the coating device 200 and introduced into the roll pressing device 300 have excessive defects, the defects may be removed from the electrode rolls in the roll pressing device 300. Excessive defects in the electrode rolls processed by the coating device 200 may include, for example, a large number of tab foldings, ring defects, and the like.

If the electrode rolls processed by the roll pressing device 300 have excessive defects, the defects in the electrode rolls may be removed in either of the roll pressing device 300 and the rewinding stage 600, which operates in a rewinding mode. Subsequently, the electrode roll with reduced (or no) defects may be introduced into the slitting device 400. Excessive defects in the electrode rolls processed by the roll pressing device 300 may include missing windings and exceeding an upper limit of the number of defect tags.

If the electrode rolls processed by the slitting device 400 have excessive defects, the defects in the electrode rolls may be removed in the rewinding stage 600. Subsequently, an electrode roll having reduced (or no) defects may be introduced into the notching device 500. Excessive defects in the electrode roll processed by the slitting device 400 may include exceeding an upper limit of the number of defect tags.

Here, each of the rewinding stages 600 may be online. Each of the rewinding stages 600 may be configured to dispose defects from the electrode rolls, and to collect scrap data indicative of the lengths disposed. Accordingly, the rewinding stages 600 may update the length of the disposed electrodes and increase the traceability of the battery manufacturing process.

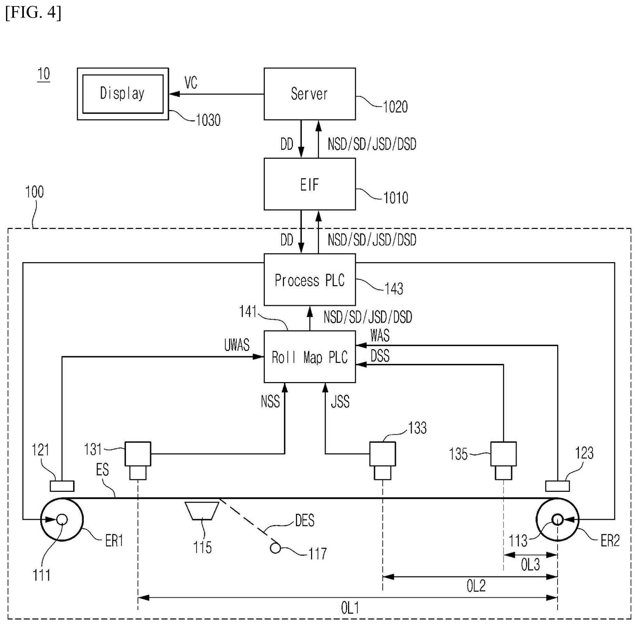

FIG. 4 is a block diagram illustrating a battery manufacturing system 10 according to exemplary embodiments.

Referring to FIG. 4, the battery manufacturing system 10 may include an electrode processing device 100, an EIF 1010, and a server 1020. The battery manufacturing system 10 may communicate with a visualization device 1030. The electrode processing device 100 may be one or more of a coating device 200, a roll pressing device 300, a slitting device 400, a notching device 500, and rewinding stages 600.

The electrode processing device 100 may include an unwinder 111, a rewinder 113, a first encoder 121, a second encoder 123, a datum point sensor 135, a roll map programmable logic controller (PLC) 141, and a process PLC 143. In some embodiments, the electrode processing device 100 may further include a splicing table 115 and/or a scrap port 117.

The battery manufacturing system 10 may be configured to generate a roll map including data about the electrode sheets ES. The roll map may represent the electrode sheet ES based on coordinate values representing locations on the electrode sheet ES. On the electrode sheet ES, a process for manufacturing a battery may be performed, as described later. The roll map may represent events of the processes performed on the electrode sheet ES and may include data associated with coordinate values. Accordingly, the roll map may enable feedback, feed forwarding, and tracing of the manufacturing process of the battery as described herein.

The first electrode roll ER1 on which the previous process was performed may be loaded into the unwinder 111. The unwinder 111 may be configured to unwind the electrode sheet ES from the first electrode roll ER1. The rewinder 113 may be configured to wind the electrode sheet ES as the second electrode roll ER2. The electrode sheet ES may be wound as the second electrode roll ER2, and may be cut and separated after reaching a predetermined wound length. Accordingly, the electrode sheet ES may be moved between the unwinder 111 and the rewinder 113.

A roll map may be created on a lot basis. A lot is a unit of production in a roll-to-roll process, and a separated second electrode roll ER2 is an example of a lot. Similarly, a first electrode roll ER1 newly loaded into the unwinder 111 is an example of a lot. Accordingly, the server 1020 may store a first roll map from a previous process (e.g., coating process, roll pressing process, or slitting process). The first roll map may correspond to the first electrode roll ER1. Further, the server 1020 may be configured to generate a second roll map of the second electrode roll ER2 based on the processing of the electrode processing device 100. The second roll map may correspond to the second electrode roll ER2.

As a non-limiting example, the second roll map may be generated by updating the first roll map. Alternatively, the second roll map may be generated based on data generated by the electrode processing device 100 without loading the first roll map.

In the roll map, time series data configured over time (i.e., as the process progresses) may be associated with coordinate data collected based on the amount of movement of the electrode sheet ES (i.e., either the amount of exhaustion or the amount of input).

The manufacturing of batteries involves a series of different processes, with leading processes affecting following processes. In this case, it may be difficult to reflect the time series data of the leading process to the following process if the time series data of the leading process is not directly matched with the actual workpieces, intermediate products, and products. The calibration of the following process based on data generated by the results of the leading process may be referred to hereafter as feed forward.

The workpiece here may refer to the article provided as a result of the respective process, such as the electrode sheet ES on which the coating process, the roll pressing process and the slitting process shown in FIG. 3 have been performed. An intermediate product may refer to one of the separators, electrodes and assemblies thereof that have been cut by a notching process. An intermediate product may be a structure including a housing and an electrode assembly embedded in the housing (in some cases, the structure further includes an electrolyte). A product may refer to an article that has been processed operable as a battery by an activation process. The foregoing definitions of workpiece, intermediate product, and product are for one aspect thereof and are not intended to exclude conventional definitions of the same.

The electrode process in a battery involves a series of roll-to-roll processes. For feed forwarding, the time series data needs to be related to real-world workpieces, parts, intermediate products, and their positions on the product. Here, feed forwarding may include controlling the processing of the electrode sheet ES based on a roll map of the first electrode roll ER1 generated in a previous process. For example, the roll map of the first electrode roll ER1 processed in the current process may include defect data DD, and in the electrode processing device 100, the electrode sheets ES that are unwound from the first electrode roll ER1 may be disposed based on the defect data DD.

A roll map may relate time series data to coordinate data that includes coordinate values representing locations on real-world workpieces, parts, intermediate products, and products. Based on the coordinate data, the roll map may provide a matching of the time series data with real-world workpieces, parts, intermediate products, and products. As a result, the creation of roll maps and feed forwarding based on roll maps may increase productivity and quality by quantifying and objectifying aspects of the process that were previously dependent on human judgment.

In addition, the roll map of a leading lot may be used to improve the process for the following lot, and this operation may be referred to as process feedback. Process feedback using roll maps may include identifying process conditions and process parameters that resulted in problems and defects based on the data contained in the roll map.

Further, the roll map may be cumulatively generated for workpieces, parts, intermediate products, and products of unit processes, as described later, to enable traceability of the process history for a shipped product (e.g., a battery cell, battery module, or battery pack). In one example, a battery cell may include a cell ID formed on an electrode assembly or a case. The cell ID may include lot number and coordinate information of the electrodes and separators included in the battery cell. In other words, the cell ID may be associated with a roll map of the electrodes and separators included in the battery cell. Accordingly, if an event such as a quality issue occurs in an already shipped battery cell, historical data of the manufacturing of the battery cell may be retrieved based on the cell ID.

The first encoder 121 may be configured to sense the amount of electrode sheet ES that has been unwound from the first electrode roll ER1 by the unwinder 111. Accordingly, the first encoder 121 may generate an unwound amount signal (UWAS) indicative of the length of electrode sheet ES unwound by the unwinder 111. The first encoder 121 may be configured to transmit the unwound amount signal (UWAS) to the roll map PLC 141.

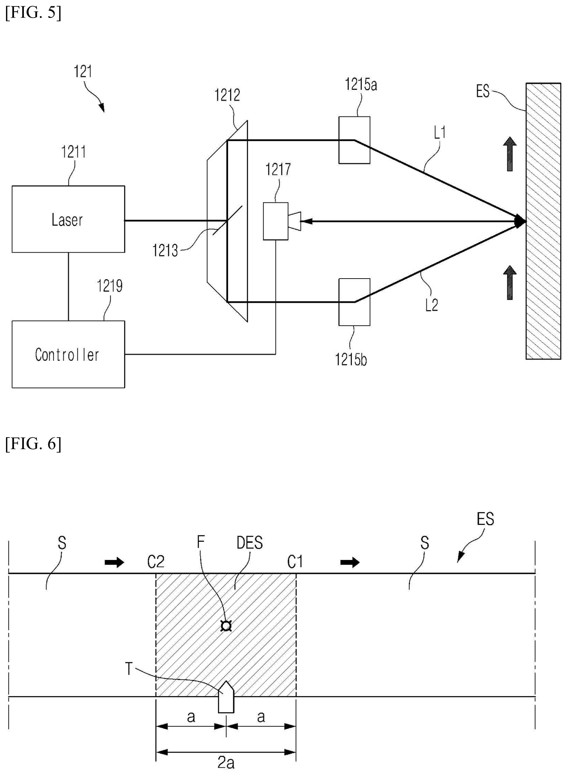

The first encoder 121 may be a contactless encoder. The first encoder 121 may be provided on the unwinder 111. In some embodiments, the first encoder 121 may be a contactless encoder configured to measure the linear velocity of the electrode sheet ES using laser beam. FIG. 5 is a block diagram conceptually illustrating the configuration of the first encoder 121.

Referring to FIG. 5, the first encoder 121 includes a first light source 1215a configured to irradiate the electrode sheet ES with a first laser beam L1 and a second light source 1215b configured to irradiate the electrode sheet ES with a second laser beam L2.

A laser beam can be generated from the laser generating device 1211, and the laser beam can be split in both directions in a beam splitter 1213. The split laser beam can then be irradiated through a prism 1212 into a first light source 1215a and a second light source 1215b.

The first laser beam L1 from the first light source 1215a and the second laser beam L2 from the second light source 1215b may be oriented to be irradiated at substantially the same location on the electrode sheet ES. Since the first laser beam L1 and the second laser beam L2 are not parallel, they may be directed to any desired location by means of suitable optics. The first light source 1215a and the second light source 1215b may include optics to direct the first laser beam L1 and the second laser beam L2 to specific locations.

The first encoder 121 may further include a light receiving part 1217. The light receiving part 1217 is configured to receive a first laser beam L1 and a second laser beam L2 reflected from a surface of the electrode sheet ES. When the first laser beam L1 and the second laser beam L2 are reflected from substantially the same location on the electrode sheet ES, an interference pattern is generated due to Doppler shifted light scattered from the surface of the electrode sheet ES, and the light receiving part 1217 acquires the interference pattern and communicates it to a controller 1219. The controller 1219 may analyze the interference pattern to determine the linear velocity of the electrode sheet ES.

Referring again to FIG. 4, the second encoder 123 may be configured to sense the amount of electrode sheet ES being wound to the second electrode roll ER2 by the rewinder 113. Accordingly, the second encoder 123 may generate a wound amount signal (WAS) indicative of the length of electrode sheet ES wound by the rewinder 113. The second encoder 123 may be configured to transmit the wound amount signal WAS to the roll map PLC 141.

The second encoder 123 may be a contact type encoder. In some embodiments, the second encoder 123 may be an encoder configured to contact the electrode sheet ES with a rotating wheel to measure the length over which the electrode sheet ES has been transferred. The second encoder 123 may be provided on the rewinder 113.

In the first encoder 123, a defect, such as the uncoated part, has not yet been removed from the first electrode roll ER1. If the first encoder 123 is a contact type, when the electrode sheet ES is unwound from the unwinder 111, it may slide more than the allowable amount in the area where the defect such as the uncoated part exists, thereby increasing the measurement error. Therefore, by adopting a contactless encoder for the first encoder 123, the measurement error may be minimized.

Furthermore, as will be described later, the defective portion of the electrode sheet ES is removed and wound in the rewinder 113. Thus, in the second encoder 123, a defect-removed electrode sheet ES is wound to form the second electrode roll ER2. Since the defects have already been removed, there is relatively little concern about measurement error due to slippage, and it is possible to produce electrode products with an error within tolerance even when using a relatively inexpensive contact type rotary encoder.

The defective portion of the electrode sheet ES may be disposed as described later. Accordingly, the length of the electrode sheet ES that has been unwound from the unwinder 111 may be different from the length of the electrode sheet ES that has been wound by the rewinder 113. Since the length of the unwound electrode sheet ES is measured by the contactless first encoder 121, it may be measured with high precision.

The roll map PLC 141 may be configured to collect coordinate data of the electrode sheet ES based on the unwound amount signal (UWAS) and/or the wound amount signal (WAS) of the electrode sheet ES. In one example, the roll map PLC 141 may determine a distance traveled by the electrode sheet ES based on the UWAS of the electrode sheet ES, and accordingly, the roll map PLC 141 may be configured to determine a location within the electrode sheet ES of the portion of the electrode sheet ES being unwound by the unwinder 111 at each time an event occurs on the electrode sheet ES. As another example, the roll map PLC 141 may determine a distance traveled by the electrode sheet ES based on a wound amount signal (WAS) of the electrode sheet ES, and accordingly, the roll map PLC 141 may be configured to determine a location within the electrode sheet ES of the portion of the electrode sheet ES being wound by the rewinder 113 at each point in time when an event occurs on the electrode sheet ES. As another example, the roll map PLC 141 may determine a distance traveled by the electrode sheet ES based on each of the unwound amount signal (UWAS) and the wound amount signal (WAS).

Here, the events may include any processing, inspection, and measurement that occurs to the electrode sheet ES in the electrode processing device 100, such as cutting the electrode sheet ES, joining the electrode sheet ES, sensing a datum point on the electrode sheet ES, sensing a defect tag on the electrode sheet ES, and the like. Hereinafter, as a non-limiting example, the technical ideas of the present disclosure will be described with reference to an embodiment in which the roll map PLC 141 collects coordinate data based on the wound amount signal (WAS) of the electrode sheet ES.

The coordinate data may include coordinate values that are matched to each portion of the electrode sheet ES, i.e., each arbitrary point on the electrode sheet ES may be matched with a coordinate value. The coordinate value may be, but is not limited to, a one-dimensional quantity in the longitudinal direction of the electrode sheet ES. For example, the coordinate value may be a two-dimensional quantity in the longitudinal direction and in the y-direction of the width direction of the electrode sheet ES.

A defect detection sensor 131 may be configured to sense any of a defect mark and a defect tag on the electrode sheet ES. The defect mark may be formed, for example, by an inkjet printer, and may include information about the location and type of defect. The defect tag may be applied to the electrode sheet ES by an operator or a defect tag applicator. The defect tag may indicate a location of a defect on the electrode sheet ES. As a non-limiting example, the defect detection sensor 131 may be one of a color sensor and a vision machine. The defect detection sensor 131 may be configured to generate a defect sensing signal (NSS). The defect detection sensor 131 may be configured to transmit the defect sensing signal (NSS) to the roll map PLC 141.

FIG. 6 is a conceptual diagram illustrating how to define a defective portion DES of an electrode sheet ES based on a defect tag T.

Referring to FIG. 6, when a defect F on the electrode sheet ES is detected, a defect tag T is assigned to the corresponding position. As previously described, the defect F on the electrode sheet ES may be identified by the defect detection sensor 131 (see FIG. 4), and the roll map creation device may store the tag coordinates corresponding to the location where the defect F on the electrode sheet ES is identified.

A portion of the electrode sheet ES on which defect F has occurred needs to be removed. When the portion having defect F occurred is removed, the overall length of the electrode sheet ES is correspondingly shortened.

Based on the tag coordinates indicating the location of the defect F in the electrode sheet ES, a leading removal reference coordinate C1 preceding the tag coordinates and a following removal reference coordinate C2 following the tag coordinates may be defined. Further, a section between the leading removal reference coordinate C1 and the following removal reference coordinate C2 may be defined as a defective portion DES of the electrode sheet ES.

The leading removal reference coordinate C1 may be a coordinate that precedes the tag coordinate by a predetermined length (a) from the tag coordinate. In some embodiments, the following removal reference coordinate C2 may be a coordinate following by a predetermined length (a)'from the tag coordinate. In some embodiments, the length of the defective portion DES may be 2a, which is twice the predetermined length a.

By excluding the defective portion DES from the electrode sheet ES, a roll map of the surviving electrodes S may be created. The electrode sheet between the leading removal reference coordinate C1 and the following removal reference coordinate C2 (i.e., the defective portion (DES)) may be cut out and discarded from the real electrode, and the end of the leading removal reference coordinate C1 and the end of the following removal reference coordinate C2 may be bonded together.

Referring again to FIG. 4, the roll map PLC 141 may be configured to collect the defect sensing data (NSD) based on the defect sensing signal (NSS). The roll map PLC 141 may be configured to associate coordinate data with the defect sensing signal (NSS) to collect the defect sensing data (NSD). The defect sensing data (NSD) may include, for example, a defect value indicative of the presence of a defect and an aspect of the defect, and a coordinate value matched to the defect value.

To collect the defect sensing data NSD, the coordinate data may be calibrated based on the offset length OL1. The calibration of the coordinate data is to compensate for the difference between the portion of the electrode sheet ES that is sensed by the first encoder 121, i.e., the portion of the electrode sheet ES that is wound by the rewinder 113, and the portion of the electrode sheet ES that is sensed by the defect detection sensor 131.

According to exemplary embodiments, the roll map PLC 141 may calibrate the coordinate data collected at the same time as the defect sensing signal (NSS) based on the offset length OL1 to collect the defect sensing data (NSD), and associate the calibrated coordinate data with the defect sensing signal (NSS).

The offset length OL1 may be the length of the electrode sheet ES between the defect detection sensor 131 and the rewinder 113 along the travel path of the electrode sheet ES. The offset length OL1 may be equal to a straight line distance between the defect detection sensor 131 and the rewinder 113.

The process PLC 143 may be configured to control the operation of the unwinder 111, the rewinder 113, the scrap port 117, and the processor 119. The process PLC 143 may be configured to generate signals for starting and stopping the operation of the unwinder 111, the rewinder 113, the scrap port 117, and the processor 119.

The process PLC 143 may be configured to receive the defect sensing data NSD from the roll map PLC 141. The process PLC 143 may be configured to receive defect data DD from the server 1020. The defect data DD may be loaded into the process PLC 143 via the EIF 1010. Here, the defect data DD may indicate a location of a defect on the first electrode roll ER1. The defect data DD may be included in a first roll map of the first electrode roll ER1.

The process PLC 143 may be configured to generate signals for starting and stopping the unwinder 111, the rewinder 113, the scrap port 117, and the processor 119 based on the defect sensing data (NSD) and the defect data (DD). If a defect on the electrode sheet ES identified by the defect data DD and the defect sensing data NSD approaches the splicing table 115, the process PLC 143 may be configured to generate signals to slow the movement of the electrode sheet ES and/or to stop winding and unwinding of the unwinder 111 and the rewinder 113.

After cutting the starting location of the defect (or a location proximate to the starting location of the defect, considering process margins) on the splicing table 115, the scrap port 117 may be configured to wind the defective portion DES of the electrode sheet ES, as shown by the bold dashed line. After the defective portion DES of the electrode sheet ES has been sufficiently wound by the scrap port 117, the electrode sheet ES connected to the scrap port 117 and the electrode sheet ES connected to the unwinder 111 may be separated. The current process may then be continued by joining the portion of the electrode sheet ES connected to the unwinder 111 with the portion of the electrode sheet ES connected to the rewinder 113. The portion of the electrode sheet ES connected to the unwinder 111 and the portion of the electrode sheet ES connected to the rewinder 113 may be joined on the splicing table 115.

In some embodiments, after the unwinder 111 and rewinder 113 are shut down for disposal of the defective portion DES of the electrode sheet ES, the defective portion DES of the electrode sheet ES may be moved to the scrap port by the drive of the unwinder 111 without the drive of the rewinder 113. In some embodiments, the roll map PLC 141 may be configured to collect scrap data SD based on the unwound amount signal (UWAS) after initiating disposal of the defective portion DES of the electrode sheet ES. In some embodiments, to collect the scrap data SD, the roll map PLC 141 may receive signals from the process PLC 143 to control the operation of the unwinder 111 and the rewinder 113. As another example, the roll map PLC 141 may be configured to collect scrap data SD based on the amount of rotation of the drive roll of the scrap port 117. As another example, the roll map PLC 141 may be configured to collect scrap data SD based on a change in the distance between datum points on the electrode sheet ES and a distance between a joint on the electrode sheet ES and a datum point.

The roll map PLC 141 may be configured to collect scrap data SD indicative of the length of electrode sheets ES disposed due to defects from the electrode rolls for the electrode processing device 100. Accordingly, the length of the disposed electrodes may be updated in the rewinding stages 600, and the traceability of the battery manufacturing process may be improved.

In some embodiments, the roll map PLC 141 may be configured to calculate the length of the discarded electrode sheet from the UWAS and WAS signals. In some embodiments, the roll map PLC 141 may be configured to verify that the difference between the unwound amount and the wound amount calculated from the unwound amount signal (UWAS) and the wound amount signal (WAS) is consistent with the scrap data SD. In some embodiments, the roll map PLC 141 may be configured to confirm the scrap data SD as the disposed amount of the electrode sheet if the difference between the unwound amount and the wound amount corresponds to the scrap data SD.

The joint sensor 133 may be configured to sense a joint on the electrode sheet ES to generate a joint sensing signal JSS. The joint may be where two ends of the electrode sheet ES are joined after removing a defective portion DES of the electrode sheet ES. As a non-limiting example, the joint sensor 133 may be one of a color sensor and a vision machine. The joint sensor 133 may be configured to transmit a joint sensing signal JSS to the roll map PLC 141.

The roll map PLC 141 may be configured to collect the joint sensing data JSD based on the joint sensing signal JSS. The roll map PLC 141 may be configured to collect the joint sensing data JSD by correlating the joint sensing signal JSS with coordinate data.

According to exemplary embodiments, the roll map PLC 141 may calibrate the coordinate data collected at the same time as the joint sensing signal JSS to collect the joint sensing data JSD, based on the offset length OL2, and associate it with the calibrated coordinate joint sensing signal JSS.

The offset length OL2 may be the length of the electrode sheet ES between the joint sensor 133 and the rewinder 113 along the travel path of the electrode sheet ES. The offset length OL2 may be equal to a straight line distance between the joint sensor 133 and the rewinder 113.

The datum point sensor 135 may be configured to sense datum points on the electrode sheet ES to generate a datum point sensing signal DSS. The datum points may be formed at set spacings on the electrode sheet ES to indicate locations on the electrode sheet ES. Each of the datum points may be, for example, a two-dimensional barcode including information about an orientation of the datum point and a sequence of datum points. Accordingly, the datum point sensing signal DSS may include a time value corresponding to the sensing of the datum point and a sequence value of the datum point. The datum point sensor 135 may be configured to transmit the datum point sensing signal DSS to the roll map PLC 141.

The roll map PLC 141 may be configured to collect the datum point sensing data DSD based on the datum point sensing signal DSS. The roll map PLC 141 may be configured to collect the datum point sensing data DSD by correlating the datum point sensing signal DSS with coordinate data.

According to exemplary embodiments, the roll map PLC 141 may calibrate the coordinate data collected at the same time as the datum point sensing signal DSS based on the offset length OL3 to collect the datum point sensing data DSD, and associate the calibrated coordinate data with the datum point sensing signal DSS.

The offset length OL3 may be the length of the electrode sheet ES between the datum point sensor 135 and the rewinder 113 along the travel path of the electrode sheet ES. The offset length OL3 may be equal to a straight line distance between the datum point sensor 135 and the rewinder 113.

According to exemplary embodiments, any of the data generated based on scrap data SD, defect sensing data NSD, and events on the electrode sheet ES may be calibrated based on the datum point sensing data DSD.

The electrode processing device 100 may further include additional inspection measuring instruments. As used herein, an inspection measuring instrument is an umbrella term for an instrument capable of performing only inspection, an instrument capable of performing only measurement, and an instrument capable of performing both inspection and measurement, and may be referred to as an inspection measuring instrument when one of the three is applicable. The inspection measuring instrument may include a sensing part and a processing part.

The inspection measuring instrument may be configured to collect or generate inspection measurement data. As used herein, inspection measurement data is an umbrella term for both inspection data and measurement data, and may be referred to as inspection measurement data when at least one of the two is applicable. The processing part of the inspection measuring instrument may be wired or wirelessly coupled to the sensing part.

The measurement data may include a plurality of measurement values expressed numerically. For example, the measurement data may include dimensional data of the electrode sheet ES, such as thickness and width, loading amount data of the coating material on the electrode sheet ES, dimensional data such as width of the insulating material provided on the coating material and overlap width between the coating material and the insulating material, mismatch data between the coated part lanes on the upper surface of the electrode sheet ES and the coated part lanes on the lower surface of the electrode sheet ES, and the like. Here, the loading amount refers to the amount of coating material loaded per unit area of the electrode sheet ES, which may be an area density of the coating material.

The inspection data may include determinations of the quality of portions of the electrode sheet ES and process events. For example, the inspection data may include data on the appearance of the electrode sheet ES collected by an image-based device, such as a machine vision, data on breaks and joints in the electrode sheet ES, data on portions of the electrode sheet ES on which a sampling inspection was performed, data on portions of the electrode sheet ES scheduled for disposal, data on disposed portions of the electrode sheet ES, data on the amount of coating material and insulating material on the electrode sheet ES, data on datum points indicating the location of the electrode sheet ES, and defect data such as pinhole defects, crater defects, line defects, crack defects, sidling defects, island defects, fold defects, wrinkle defects, dent defects, and stab defects. The inspection device may be any one of a color sensor, a joint sensor, a datum point sensor, a machine vision, and the like.

The inspection measurement data described above may be time series data. The inspection measurement data may be temporally ordered. Temporal ordering is a key characteristic of time series data, organizing events in the order in which they occur and arrive for processing. In other words, the inspection measurement data may be stored based on when the inspection and/or measurement was performed, and the inspection measurement data may be associated with time. Accordingly, each of the measurement values and each of the inspection values in the inspection measurement data may be time-matched.

The roll map PLC 141 may be in operative communication with the first encoder 121, the second encoder 123, the defect detection sensor 131, the joint sensor 133, the datum point sensor 135, and additional measuring instruments and inspection devices via a wired or wireless data network. The data network may be one-way or two-way. The data network may be instantiated by a public and/or specialized network using physical channels, WiFi, Bluetooth, and/or other frequency bands. The first encoder 121, second encoder 123, defect detection sensor 131, joint sensor 133, datum point sensor 135, and additional instruments and inspection devices may be configured to collect data from, or generate signals for the collection of data from, equipment, workpieces, intermediate products, and products within the electrode processing device 100.

The roll map PLC 141 may be configured to transmit defect sensing data NSD, joint sensing data JSD, scrap data SD, and datum point sensing data DSD to the process PLC 143. The defect sensing data NSD, joint sensing data JSD, scrap data SD, and datum point sensing data DSD may be delivered to the first server 1020 via the process PLC 143 and the EIF 1010. The process PLC 143 and EIF 1010 may relay communication of data including the defect sensing data NSD, joint sensing data JSD, scrap data SD, and datum point sensing data DSD between the first server 1020 and the roll map PLC 141. However, it is not limited thereto, and the roll map PLC 141 may also transmit the defect sensing data NSD, joint sensing data JSD, scrap data SD, and datum point sensing data DSD directly to the server 1020.

A communication channel may be installed between the process PLC 143 and the server 1020 for control of the process, connecting the process PLC 143 and the server 1020 via the EIF 1010. Accordingly, data transmission via the process PLC 143, compared to the case in which the first and second encoders 121, 123 and the datum point sensor 135 directly transmit the unwound amount signal UWAS, the wound amount signal WAS, and the measurement signal to the server 1020 and the case in which the roll map PLC 141 transmits the defect sensing data NSD, joint sensing data JSD, scrap data SD, and datum point sensing data DSD directly to the server 1020, resources required for installation of communication channel may be reduced, and data processing and management may be streamlined.

The EIF 1010 may be a device for communication between the process PLC 143 of a manufacturing facility and the server, which is a higher-level server.
In some embodiments, the server 1020 may include a roll map creation part configured to generate a roll map. The roll map may be a simulation of process data of the electrode sheet ES on a plane that simulates the electrode sheet ES moving between the unwinder 111 and the rewinder 113. In this case, the server 1020 may act as a roll map creation device.

In some embodiments, the roll map PLC 141 may include a roll map creation part configured to generate the roll map. In this case, the roll map PLC 141 may act as a roll map creation device. In the following, the case where the server 1020 creates the roll map will be described. However, the roll map PLC 141 may also be configured to create roll maps in an identical, equivalent, or analogous manner to the configuration associated with the server 1020 creating the roll maps.

The server 1020 may be configured to generate a roll map based on the defect sensing data NSD, joint sensing data JSD, scrap data SD, and datum point sensing data DSD. The roll map may be generated on a lot-by-lot basis. The roll map may include data about specifications of the lot. The specifications of the lot may include, for example, a lot number, a length of the wound electrode sheet ES, a width of the electrode sheet ES, and a material and composition used to process the electrode sheet ES.

According to exemplary embodiments, the server 1020 may be a data processing system that supports various activities necessary to manage the manufacturing of secondary batteries, such as job scheduling, work ordering, quality control, and job performance aggregation. The server 1020 may be, for example, a manufacturing execution system (MES). The server 1020 may be configured to perform input, processing, output, and communication of data required for electrode manufacturing, such as coating processes, press processes, and manufacturing processes.

According to other exemplary embodiments, the server 1020 may be configured to store and process raw measurement data. By continuously monitoring the processing of the electrode sheet ES based on the measurement data, the server 1020 may manage the quality of the processing of the electrode sheet ES. According to exemplary embodiments, the server 1020 may further include a statistical process controller (SPC). By collecting and analyzing manufacturing data in near real-time, the server 1020 may timely identify problem conditions and provide alarms to operators before potential problems occur.

According to other exemplary embodiments, the server 1020, for example, may further include a data warehouse, and for example, may store defect sensing data NSD, scrap data SD, and coordinate data for an extended period of time based on a quality assurance period of the product.

In other exemplary embodiments, the server 1020 may perform all of the functions of the MES, SPC, and data warehouse, or may be provided separately from the MES, SPC, and data warehouse for roll map creation purposes.

The roll map PLC 141, process PLC 143, EIF 1010, and server 1020 may be instantiated as hardware, firmware, software, and combinations thereof. For example, the roll map PLC 141, process PLC 143, EIF 1010, and server 1020 may include computing devices such as general purpose computers, workstation computers, desktop computers, laptop computers, tablet computers, and the like. The roll map PLC 141, process PLC 143, EIF 1010, and server 1020 may include any one of simple controllers, complex processors such as microprocessors, CPUs, GPUs, and the like, processors configured by a software, and proprietary hardware and firmware. The roll map PLC 141, process PLC 143, EIF 1010, and server 1020 may be instantiated by, for example, general purpose processors or application specific hardware such as digital signal processors (DSPs), field programmable gate arrays (FPGAs), and application specific integrated circuits (ASICs).

The server 1020 may include a physical server or a cloud server. The server 1020 may provide data and analytics results to the operator through various frameworks. A framework may include protocols that support data transfer to allow the display device 1030 to visualize data via a user interface and provide updated visualizations as new data is calculated by the server 1020. The protocols supporting the data transfer may utilize HTML, JavaScript, and/or JSON.

The server 1020 may include various application programming interfaces (APIs) for storing data in databases and other data management tools. The APIs may also be used to retrieve data from databases in various data management systems. Data management systems may provide access to databases, pull data from databases, retrieve data, and generate metrics. In this context, metrics are tools for visualizing data. Metrics include time-series generated measurement values and may be used to monitor applications and generate status alerts.

The server 1020 may pass the visualization command VC to the display device 1030, and the display device 1030 may visualize the roll map to display the visualized roll map.

The electrode processing device 100 may instantiate a plug-in architecture with APIs for data acquisition to provide plug-and-play connectivity of measuring instruments and inspection devices. Accordingly, resources at a particular process step and at a particular site may be easily transferred to other processes and other sites, or new resources may be easily introduced at each process step and site.

The data network between elements of the battery manufacturing system 10 may include various types of communication channels, including one-way, two-way wired, and wireless communications. In one example, the data network may include an industrial protocol network such as OPC, Modbus, ProfiNet, or the like. The communication channels can be dedicated conduit communications such as Universal Serial Bus (USB), IEEE 802 (Ethernet), IEEE 1394 (FireWire), or other high-speed data communication standards.

In some embodiments, the battery manufacturing system 10 may further include a manual input system that allows an operator to enter manufacturing data. The battery manufacturing system 10 may allow for operator data entry using an input tool and computer-based entry of manufacturing data, such as scraping an excel file. The manual input system may be, for example, a human-machine interface (HMI) of a supervisory control and data acquisition (SCADA) system. SCADA can typically include a combination of software and hardware, such as PLCs and Remote Terminal Units (RTUs). The HMI is the main element of a SCADA system as it is the screen that enables the operator to communicate with the SCADA system. Manual input by the HMI may include, for example, selecting defect types and reflecting performance upon completion.

According to some embodiments, the operations of the roll map PLC 141, the process PLC 143, the EIF 1010, and the server 1020 may be instantiated as commands stored on a machine-readable medium that can be read and executed by one or more processors. Here, the machine-readable medium may include any mechanism for storing and/or transmitting information in a form readable by a machine (e.g., a computing device). For example, the machine-readable medium may include read only memory (ROM), random access memory (RAM), magnetic disk storage media, optical storage media, flash memory, electrical, optical, acoustic, or other forms of propagated signals (e.g., carrier waves, infrared signals, digital signals, etc.), and any other signals.

The roll map PLC 141, process PLC 143, EIF 1010, and server 1020 may include firmware, software, routines, and commands for performing any of the foregoing operations, or any of the processes described below. For example, the firmware, software, routines, and commands of the roll map PLC 141, process PLC 143, EIF 1010, and server 1020 may be instantiated in memory.

The roll map PLC 141 receives an unwound amount signal (UWAS), a wound amount signal (WAS), a defect sensing signal (NSS), a joint sensing signal (JSS), and a datum point sensing signal (DSS), and collects coordinate data, defect sensing data (NSD), joint sensing data (JSD), scrap data (SD), and datum point sensing data (DSD), scrap data (SD), and datum point sensing data (DSD), and may be instantiated by a software configured to transmit the defect sensing data (NSD), joint sensing data (JSD), scrap data (SD), and datum point sensing data (DSD).

The process PLC 143 generates control signals for controlling the unwinder 111, the rewinder 113, the scrap port 117, and the processor 119 based on the product ID, the product recipe, the defect data (DD), and the defect sensing signal (NSS), and receives the defect sensing data (NSD), joint sensing data (JSD), scrap data (SD), and datum point sensing data (DSD), and may be instantiated by a software configured to transmit the defect sensing data (NSD), joint sensing data (JSD), scrap data (SD), and datum point sensing data (DSD).

The EIF 1010 may include a software for relaying the transmission of data and information between the process PLC 143 and the server 1020. More specifically, the EIF 1010 may include a software configured to perform flow control, error control, synchronization, sequence control, addressing, multiplexing, routing, and format conversion of communications between the process PLC 143 and the server 1020.

The server 1020 may include a software, for example, configured to transmit the product ID and product recipe to the process PLC 143 and generate a roll map based on the defect sensing data (NSD), joint sensing data (JSD), scrap data (SD), and datum point sensing data (DSD).

However, this is for illustrative purposes only, and the operations of the roll map PLC 141, process PLC 143, EIF 1010, and server 1020 described above may be caused by other devices executing computing devices, distributed computing devices, processors, firmware, software, routines and commands, and the like.

The architecture of the battery manufacturing system 10 configured to generate roll maps may be instantiated by adding only the roll map PLC 141 to the processing part, process PLC 143, EIF 1010, and server 1020, which are elements of a modern process management system. In other words, the system according to exemplary embodiments may utilize existing manufacturing site resources and reduce additional capital expenditures. Furthermore, by applying the same architecture to a newly constructed manufacturing facility as an existing manufacturing facility, the reliability of battery manufacturing, discovery/improvement of problematic processes, and introduction of new processes may be streamlined.

### (Second embodiment)

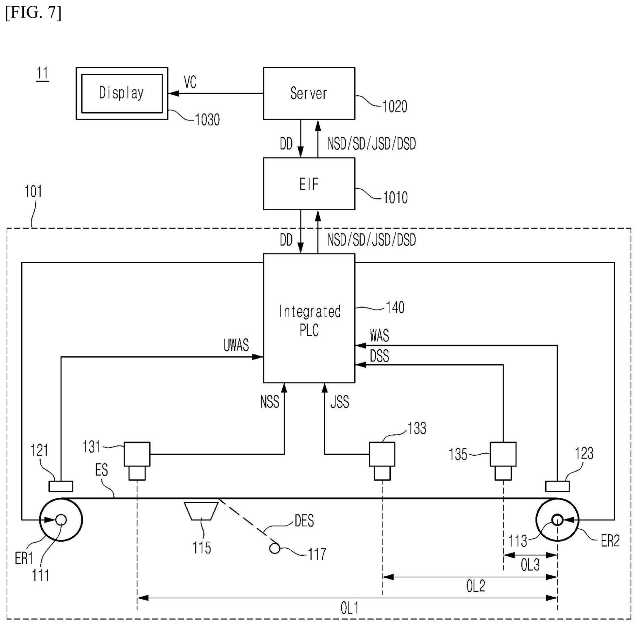

FIG. 7 is a schematic diagram illustrating a battery manufacturing system 11 according to another embodiment of the present disclosure.

Referring to FIG. 7, the battery manufacturing system 11 may include an electrode processing device 101, an EIF 1010, and a server 1020. The battery manufacturing system 11 may communicate with a visualization device 1030.

The EIF 1010, server 1020, and visualization device 1030 are substantially the same as described with reference to FIG. 4.

The electrode processing device 101 may include an unwinder 111, a rewinder 113, a splicing table 115, a scrap port 117, a first encoder 121, a second encoder 123, a datum point sensor 135, and an integrated PLC 140.

The unwinder 111, rewinder 113, splicing table 115, scrap port 117, first encoder 121, second encoder 123, datum point sensor 135, EIF 1010, server 1020, and display device 1030 are substantially the same as described with reference to FIG. 4, and thus repetitive descriptions of them are omitted.

The integrated PLC 140 may be configured to perform the functions of the roll map PLC 141 and the process PLC 143 of FIG. 4. Accordingly, the integrated PLC 140 receives the unwound amount signal (UWAS), the wound amount signal (WAS), the defect sensing signal (NSS), the joint sensing signal (JSS), and the datum point sensing signal (DSS), collects the coordinate data, the defect sensing data (NSD), the joint sensing data (JSD), the scrap data (SD), and the datum point sensing data (DSD), and transmits the defect sensing data (NSD), joint sensing data (JSD), scrap data (SD), and datum point sensing data (DSD), and may be instantiated by a software configured to generate control signals for controlling the unwinder 111, the rewinder 113, the scrap port 117, and the processor 119 based on the product ID, the product recipe, the defect data (DD), and the defect sensing data (NSD).

Although embodiments of the present disclosure have been described in detail above, one of ordinary skill in the art to which the disclosure belongs will be able to make various modifications to the disclosure without departing from the spirit and scope of the disclosure as defined in the appended claims. Accordingly, future modifications of the present disclosure will not depart from the art of the present disclosure.

## Claims

1. A battery manufacturing system comprising:
an electrode processing device for performing an electrode process; and
a roll map creation device for creating a roll map comprising coordinate data indicative of a location of an electrode and measurement and inspection data generated by the electrode progress performed on the electrode and matched to the coordinate data, wherein
the electrode processing device comprises:
an unwinder configured to unwind the electrode from a first electrode roll;
a rewinder configured to wind the electrode to a second electrode roll;
an inspection measuring instrument configured to collect the measurement and inspection data of the electrode; and
a first encoder provided on one side of the electrode, and configured to detect a speed of the electrode by irradiating a laser onto the electrode, wherein
the first encoder is a contactless encoder, and
the roll map creation device is configured to receive input of a defect location of the electrode and create an electrode removal section corresponding to the defect location, the electrode removal section created based on data detected by the first encoder.

2. The battery manufacturing system of claim 1, wherein
the roll map creation device is configured to generate a tag coordinate of a tag corresponding to the defect location to create the electrode removal section.

3. The battery manufacturing system of claim 2, wherein
the roll map creation device is configured to define, based on the tag coordinate, a preceding removal reference coordinate preceding the tag coordinate and a following removal reference coordinate following the tag coordinate, and define a section between the preceding removal reference coordinate and the following removal reference coordinate as the electrode removal section.

4. The battery manufacturing system of claim 2, wherein
the first encoder is provided at the unwinder.

5. The battery manufacturing system of claim 4, further comprising
a second encoder, which is a contact encoder, at the rewinder.

6. The battery manufacturing system of claim 4, wherein
the first encoder is configured to transmit an unwound amount signal based on a linear velocity of the electrode to the roll map creation device.

7. The battery manufacturing system of claim 6, wherein
the roll map creation device is configured to calculate an amount of disposal due to a defect of the electrode based on the unwound amount signal.

8. The battery manufacturing system of claim 1, wherein
the first encoder comprises:
a first light source configured to irradiate a first laser beam to the electrode; and
a second light source configured to irradiate a second laser beam to the electrode that is not parallel to the first laser beam, wherein
the first encoder is configured to receive the first laser beam and the second laser beam that are reflected from the electrode, and detect the speed of the electrode by analyzing the reflected first laser beam and the second laser beam.

9. The battery manufacturing system of claim 8, wherein
the first encoder is configured to analyze the reflected laser beam using interference patterns of Doppler-shifted light scattered from an electrode surface.

10. The battery manufacturing system of claim 1, further comprising:
a datum point sensor configured to detect a datum point on the electrode to generate a datum point detection signal;

11. A battery manufacturing system comprising:
an unwinder configured to unwind an electrode from a first electrode roll;
a rewinder configured to wind the electrode to a second electrode roll;
a first encoder of a contactless type configured to detect a length of the electrode unwound by the unwinder to generate an unwound amount signal;
a second encoder configured to detect a length of the electrode wound by the rewinder to generate a wound amount signal; and
a controller configured to collect coordinate data indicative of a position on the electrode based on the wound amount signal.

12. The battery manufacturing system of claim 11, wherein
the controller is configured to collect scrap data indicative of a length of a disposed portion of the electrode based on the unwound amount signal and the wound amount signal.

13. The battery manufacturing system of claim 12, further comprising:
a scrap port configured to dispose of a defective portion of the electrode.

14. The battery manufacturing system of claim 11, further comprising:
a defect detection sensor configured to generate defect a detection signal, wherein
the controller is configured to collect defect sensing data by correlating the defect sensing signal with the coordinate data.

15. The battery manufacturing system of claim 11, wherein
the first encoder comprises:
a first light source configured to irradiate a first laser beam to the electrode; and
a second light source configured to irradiate a second laser beam to the electrode that is not parallel to the first laser beam, wherein
the first encoder is configured to receive the first laser beam and the second laser beam that are reflected from the electrode, and detect a speed of the electrode sheet by analyzing an interference pattern of the reflected first laser beam and the second laser beam.

16. A battery manufacturing method comprising:
unwinding an electrode from a first electrode roll at an unwinder;
detecting a speed of the electrode with a first encoder, which is a contactless encoder provided at the unwinder;
winding the electrode into a second electrode roll at a rewinder; and
creating a roll map comprising coordinate data indicative of a position on the electrode, and measurement and inspection data generated as an electrode process performed on the electrode progresses and matched to the coordinate data, wherein
creating the roll map includes receiving a defect location of the electrode and creating an electrode removal section corresponding to the defect location, and
the electrode removal section is created based on data detected by the first encoder.

17. The battery manufacturing method of claim 16, wherein
creating the roll map is performed by a roll map creation device, and
the roll map creation device is configured to generate a tag coordinate of a tag corresponding to the defect location to create the electrode removal section.

18. The battery manufacturing method of claim 17, further comprising:
sensing a length of the electrode wound by the rewinder with a second encoder, which is a contact type encoder provided at the rewinder, wherein
the roll map creation device is configured to calculate an amount of disposal due to a defect of the electrode from:
an unwound amount signal generated by sensing an unwound length of the electrode with the first encoder; and
a wound amount signal generated by sensing an wound length of the electrode with the second encoder.
